# EUROPEAN PATENT APPLICATION

(11) **EP 0 743 638 A2**
(43) Date of publication of application: **20.11.1996**
(21) Application number: 96302656.2
(22) Date of filing: 17.04.1996
(51) Int. Cl.: G11B 15/665

(54) **Deck mechanism for magnetic recording/reproducing apparatus**

(30) Priority: 18.05.1995 KR 9512458
(71) Applicant: Samsung Electronics Co., Ltd., Suwon-city, Kyungki-do 441-370 (KR)
(72) Inventor: Eum, Jae-yong, 140-504, Chunchun Jugong Apt., Suwon-city, Kyungki-do (KR)
(74) Representative: Chugg, David John

(57) **Abstract**

A deck mechanism has a tape-guiding unit including a pinch roller (131), pole bases (121, 122), a tension lever (190) and an impedance roller (104). The tape-guiding unit is interlocked with a master cam gear (105) and a main slide member (110). The deck mechanism is simple and can be accurately controlled.

## Description

The present invention relates to a deck mechanism for a magnetic recording/reproducing apparatus, and more particularly, to a deck mechanism for a magnetic recording/reproducing apparatus, which is capable of driving a plurality of guiding devices for guiding a tape with a simplified structure.

Recording/reproducing apparatuses employing magnetic tape cassettes, e.g., videocassette recorders and camcorders, are generally provided with a plurality of tape-guiding devices.

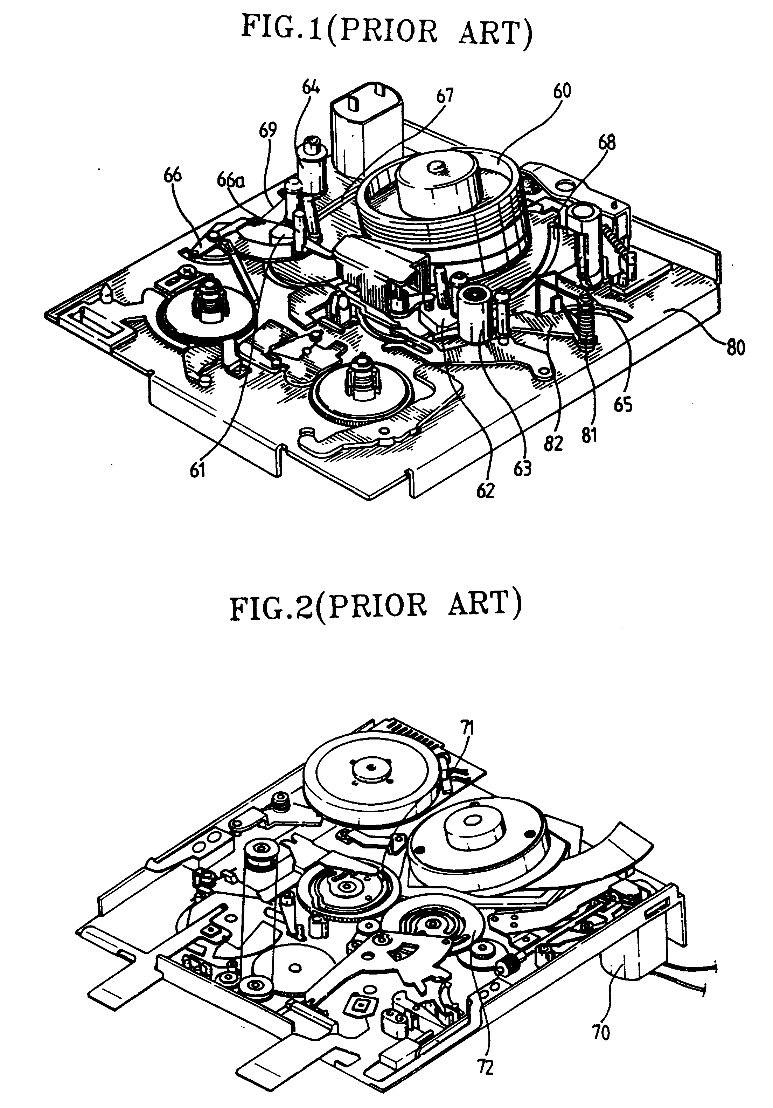

As shown in Figures 1 and 2, the tape-guiding devices include a pair of pole bases 61 and 62 for extracting a tape from a tape cassette and loading the tape onto a head drum 60, a pinch roller 63 for pressing the tape onto a capstan motor shaft 65 such that the tape travels at a constant speed, a tension lever 66 for controlling the tension of the travelling tape, and an impedance roller 64 for stably guiding the travelling of the tape, which are provided to a deck 80.

Pole bases 61 and 62 load and unload the tape while moving along guide rails 67 and 68, by means of a pair of loading gears 71 and 72 which are rotated by the force of a driving motor 70. Here, pole bases 61 and 62 are coupled to loading gears 71 and 72 by a plurality of link members (not shown). Pinch roller 63 is installed on a lever member 82 rotatably installed on deck 80 and elastically biased by a torsion spring 81, and accordingly is elastically pressed against capstan motor shaft 65. Separation of pinch roller 63 from capstan motor shaft 65 is performed according to the tape unloading operation of pole base 62.

A tension pole 66a is installed at one end of tension lever 66. Tension lever 66 is connected to deck 80 by a tension spring 69, and is rotatably installed on deck 80. Tension lever 66 is kept elastically biased clockwise by tension spring 69. Here, counterclockwise rotation of tension lever 66 is performed according to the tape unloading operation of pole base 61.

The above conventional deck mechanism is complicated and difficult to accurately control since the plurality of tape-guiding devices are installed to be driven independently.

Therefore, with a view to overcoming or reducing the above problems, it is an aim of preferred embodiments of the present invention to provide a deck mechanism for a magnetic recording/reproducing apparatus, which is simplified and can be controlled more accurately.

According to a first aspect of the invention, there is provided a deck mechanism for a magnetic recording/reproducing apparatus, comprising: a tape-guiding unit including a deck, a head drum being installed on the deck and having a plurality of magnetic heads mounted thereon, a pair of reel tables installed on the deck, for seating a tape thereon, a reel driving motor for rotating the reel tables, a pair of pole bases provided with guide rollers, for extracting the tape from a tape cassette and loading the tape onto the head drum, a capstan motor shaft, a pinch roller for pressing the tape against the capstan motor shaft such that the tape travels at a constant speed, a tension lever provided with a tension pole, for controlling the tension of the travelling tape, and an impedance roller for securely guiding the tape; and sequential driving means for sequentially interlocking the tape-guiding unit.

The sequential driving means preferably comprises:a driving motor for generating force; a master cam gear including a large-diameter gear portion connected to the driving motor, a small-diameter portion sharing the same rotation axis with the large-diameter portion, and a cam portion having an upper cam portion and a lower cam portion; a main slide member having a rack gear portion which engages with the small-diameter gear portion, for sliding laterally by interlocking with the master cam gear; a sector gear rotatably installed on the deck; first interlocking means for rotating the sector gear according to the movement of the main slide member; second interlocking means for loading and unloading the pair of pole bases by interlocking the pair of pole bases with the rotating sector gear; third interlocking means for pressing and detaching the pinch roller to and from the capstan motor shaft by interlocking the pinch roller with the main slide member; fourth interlocking means for interlocking the tension lever with the master cam gear; and fifth interlocking means for interlocking the impedance roller with the master cam gear, so that the tape-guiding unit is interlocked with the master cam gear and the main slide member.

The first interlocking means is preferably constituted such that a protrusion is extended from the lower surface of the sector gear and the main slide member is formed with a first guide slot having a horizontal guide portion and a vertical guide portion coupled to the horizontal guide portion and into which the protrusion inserts, so that when the main slide member moves, the protrusion of the sector gear moves along the first guide slot.

The second interlocking means preferably comprises: a pair of first and second loading gears rotatably installed on the deck apart from each other by a predetermined distance, a plurality of link members for connecting the first and second loading gears to the pole bases, respectively, and an idler gear for connecting the first loading gear to the second loading gear, so that one of the first and second loading gears engages with the sector gear.

Preferably the third interlocking means comprises: a pinch lever which is rotatably installed on the deck and on which the pinch roller is installed, having a first extension pin extended from the lower surface of an end of the pinch lever and an extension piece bent downward from the other end thereof; a first lever member installed under the pinch lever, sharing the same rotation axis with the pinch lever, and having a second extension pin extended from the lower surface thereof; a second lever member installed under the first lever member, sharing the same rotation axis with the first lever member, and whose edge makes contact with the extension piece of the pinch lever; a first spring for connecting the first extension pin of the pinch lever to the deck, such that the pinch roller is elastically biased to be separated from the capstan motor shaft; and a second spring for connecting the first lever member to the second lever member,
the main slide member having a second guide slot having an inclined guide portion and a horizontal guide portion connected to the inclined guide portion and into which the second extension pin inserts, so that as the main slide member moves, the first and second lever members and the pinch lever rotate.

The fourth interlocking means preferably comprises: a cam pin formed on the upper surface of an upper cam portion of the master cam gear; a cam protrusion formed on the outer circumference surface of the upper cam portion; first and second interlocking portions installed on the tension lever to interlock with the cam pin and the cam protrusion portion, respectively; a plate member fixed on the deck over the main slide member, on which the tension lever is rotatably installed; and a spring member for connecting the tension lever to the plate member, so that when the cam pin interlocks with the first interlocking portion, the tension lever is unloaded.

The fifth interlocking means preferably comprises: a cam interlocking portion formed on the outer circumferential surface of a lower cam portion of the master cam gear; and a roller lever, being elastically biased to the outer circumferential surface of the lower cam portion and rotatably installed on the deck, for supporting the impedance roller, so that the master cam gear is interlocked with the roller lever, thereby moving the impedance roller.

Preferably, the apparatus further comprises pressure-maintaining means for securely keeping said pinch roller pressed against said capstan motor shaft. Said pressure-maintaining means may comprise a pressing lever member rotatably installed on said main slide member, and a spring member for connecting an end portion of said pressing lever member to said main slide member,
so that when said main slide member moves, the other end of said pressing lever member presses said first extension pin of said pinch lever.

Preferably, said second lever member has a of guide roller and a guide post, installed thereon.

Preferably, said plate member has guide rails installed thereon, for guiding said pair of pole bases respectively.

Preferably, the mechanism further comprises an upper guide block having upper guide rails for guiding said pair of pole bases respectively, adjacent to the outer circumference of said head drum, and a plate member having lower guide rails for guiding said pair of pole bases respectively, each lower guide rail being connected to one of said pole bases.

Said head drum is preferably inclined, and one of said guide rails is inclined in the same direction that said head drum is inclined.

Preferably, the mechanism further comprises speed controlling means for controlling the speed of said reel driving motor according to the rotative angle of said tension lever. Said speed controlling means may comprise a blocking board bent from an end portion of said tension lever, and a sensor member installed on the deck corresponding to the rotative path of said blocking board and having a light-receiving portion and a light emitting portion, so that light received by said light-receiving portion is converted into an electrical signal according to the location of said blocking board between said light-receiving portion and said light-emitting portion, and applied to said reel driving motor, thereby controlling the speed of said reel driving motor.

For a better understanding of the invention, and to show how embodiments of the same may be carried into effect, reference will now be made, by way of example, to the accompanying diagrammatic drawings, in which:
Figure 1 is a perspective view of a conventional deck mechanism;
Figure 2 is a bottom perspective view of the conventional deck mechanism of Figure 1;
Figure 3 is a perspective view of a deck mechanism according to an embodiment of the present invention;
Figure 4 is a plan view of a main slide member shown in Figure 3;
Figures 5, 6 and 7 are operational views of a pole base and a pinch roller which are interlocked with the main slide member;
Figure 8 is an exploded perspective view of an assembly of the pinch roller;
Figures 9, 10 and 11 are operational views of a tension lever interlocked with a master cam gear;
Figures 12 and 13 are operational views of an impedance roller interlocked with the master cam gear;
Figure 14 is a sectional view of the master cam gear;
Figure 15 is a schematic view of the deck mechanism according to the described embodiment in a play mode;
Figure 16 is a schematic view showing the deck mechanism in a fast-forward or rewinding mode; and
Figures 17 and 18 are sectional views of a guide rail portion for the pole bases.

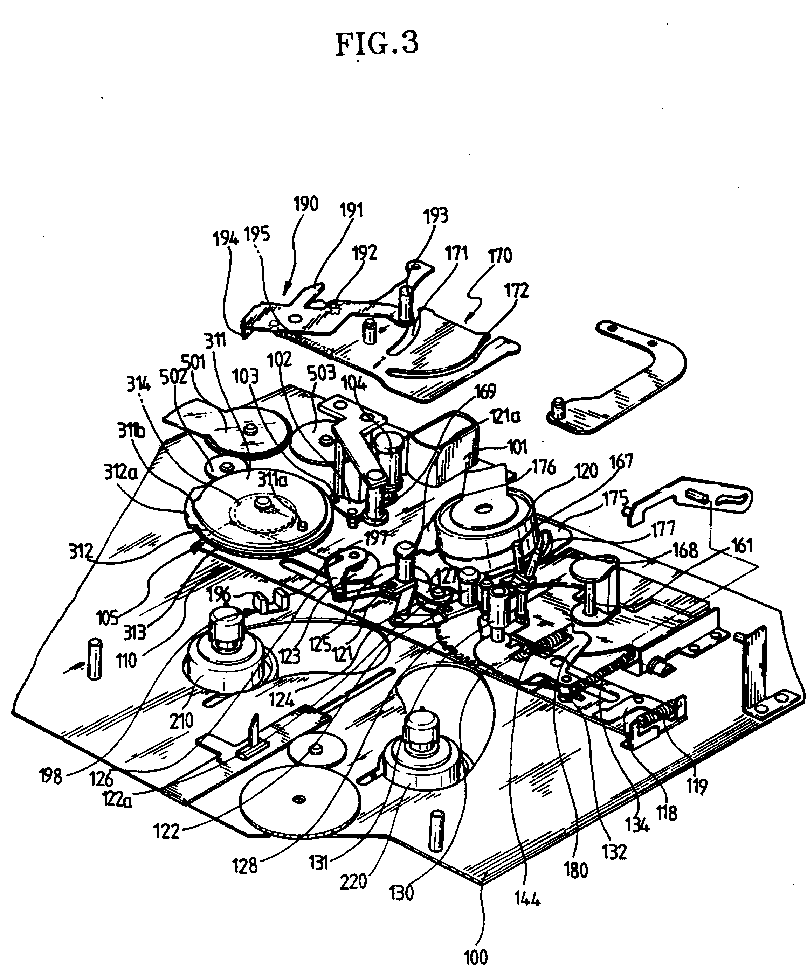

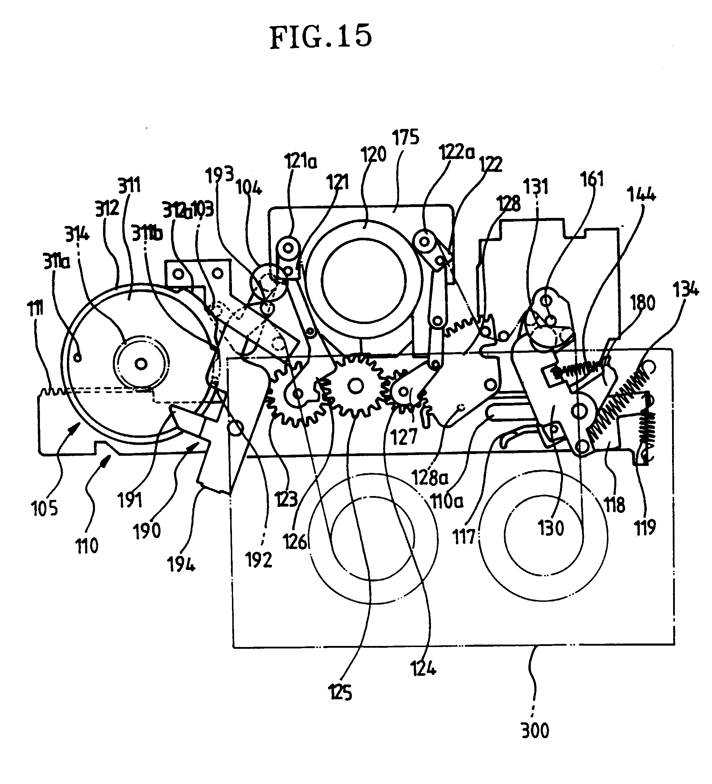

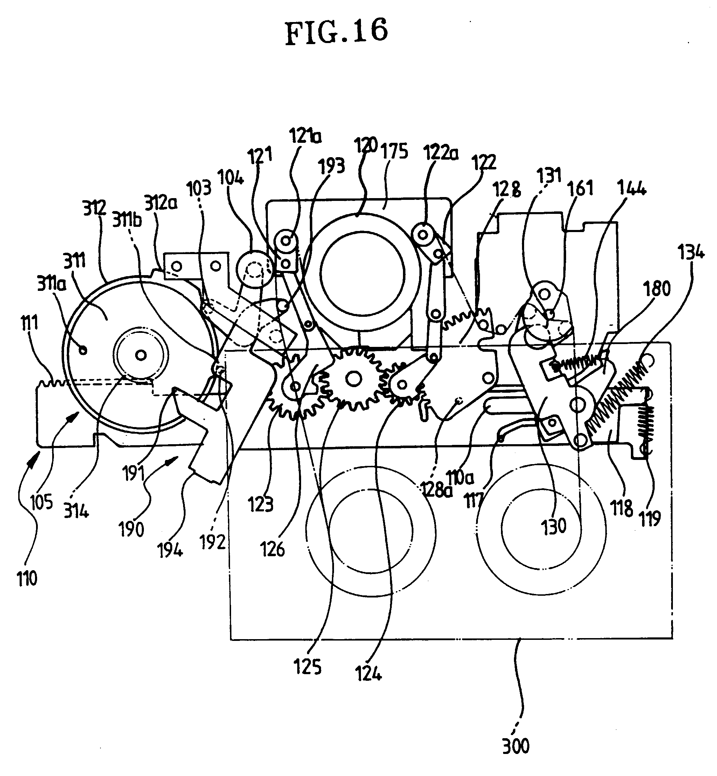

Figure 3 illustrates an embodiment of a deck mechanism according to the present invention, and Figures 15 and 16 illustrate the operations of the deck mechanism according to the present invention.

Referring to Figures 3, 15 and 16, a head drum 120 provided with a plurality of magnetic heads and reel tables 210 and 220 for seating a tape cassette 300 thereon are installed on a deck 100. Motors (not shown) for driving the reel tables may be installed under the deck.

A plurality of tape-guiding devices are installed on deck 100. The tape-guiding devices include a pair of pole bases 121 and 122 having guide rollers 121a and 122a installed thereon for extracting a tape 500 from tape cassette 300 and loading the tape onto head drum 120, a capstan motor shaft 161 and pinch roller 131 for pressing the tape such that it travels at a constant speed, a tension lever 190 having a tension pole 193 installed thereon for controlling the tension of the travelling tape, and an impedance roller 104 for securely guiding the tape.

Meanwhile, according to one aspect of the present invention, the above tape-guiding devices are sequentially interlocked by predetermined sequential driving means. The sequential driving means is installed on deck 100 as follows.

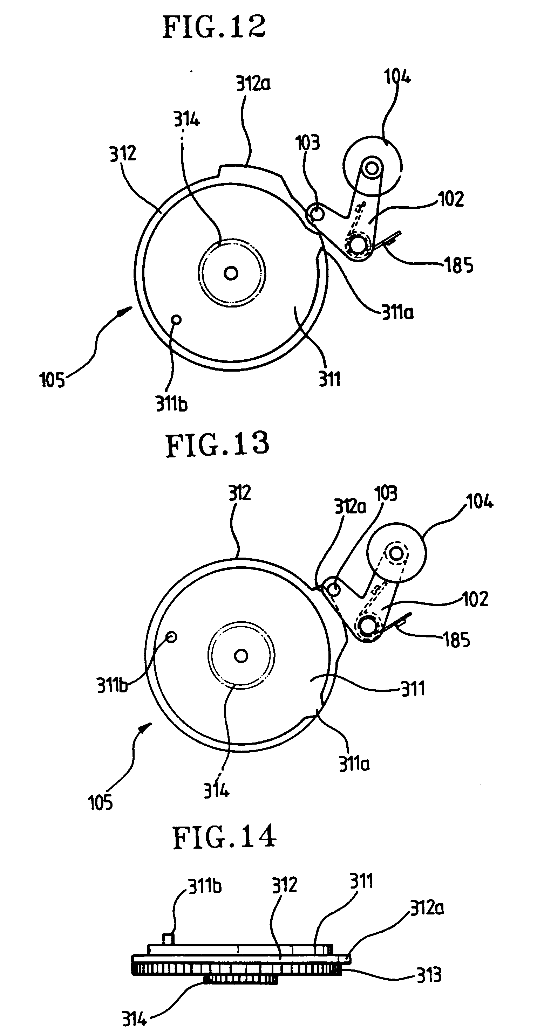

A driving motor 101 for generating force is installed at the upper left of head drum 120, in reference to Figure 3. A master cam gear 105 is connected to driving motor 101 by a mode gear 501 and a plurality of gear members 502 and 503. As shown in Figures 12, 13 and 14, master cam gear 105 is comprised of a large-diameter gear portion 313 for engaging with gear member 502, a small-diameter gear portion 314 sharing the same shaft with large-diameter gear portion 313, an upper cam portion 311, and a lower cam portion 312.

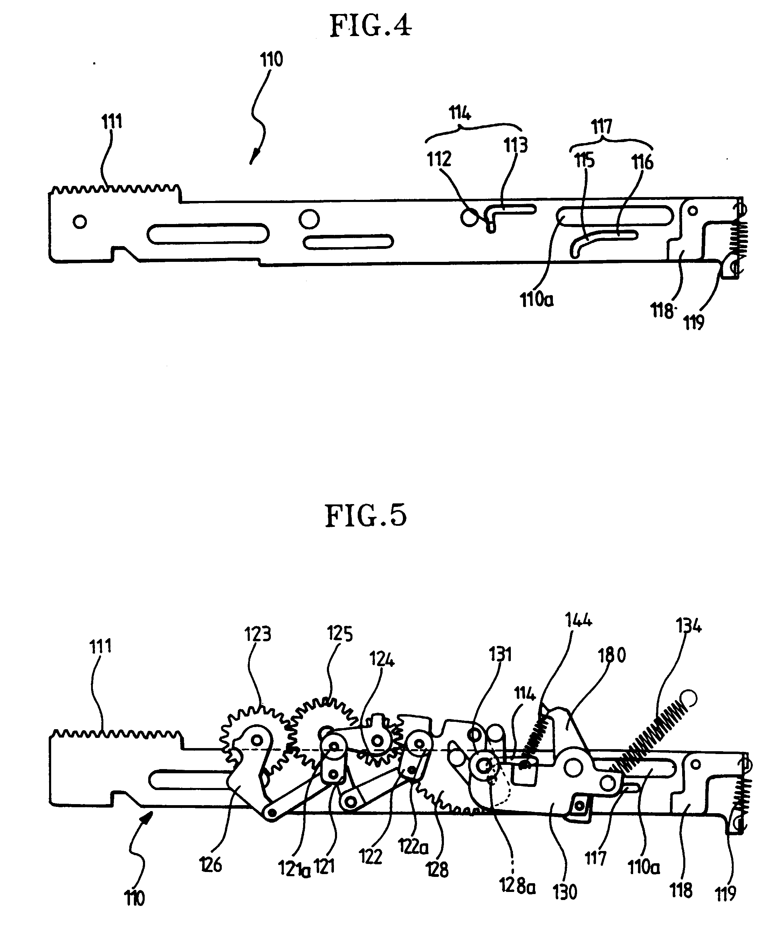

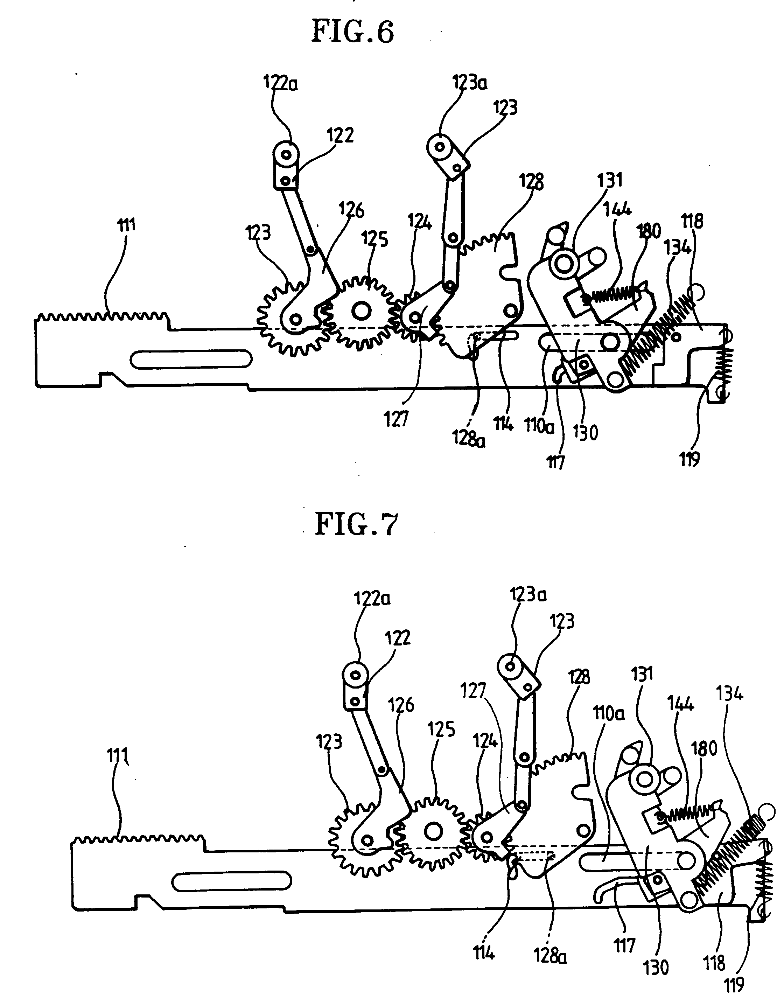

Referring to Figures 4 through 7, a main slide member 110 having a rack gear portion 111 for engaging with small-diameter gear portion 314 is installed on deck 100 to slide laterally by interlocking with master cam gear 105. A fan-shaped sector gear 128 is rotatably installed on deck 100 by predetermined first interlocking means, on main slide member 110.

There are also provided on deck 100 second interlocking means for loading and unloading the pair of pole bases 121 and 122 by interlocking pole bases 121 and 122 with the rotating sector gear 128, third interlocking means for pressing and detaching pinch roller 131 onto and from capstan motor shaft 161 by interlocking pinch roller 131 with main slide member 110, fourth interlocking means for interlocking tension lever 190 with master cam gear 105, and fifth interlocking means for interlocking impedance roller 104 with master cam gear 105.

Referring to Figures 4, 5, 6 and 7, the first interlocking means for interlocking sector gear 128 with main slide member 110 is comprised of a protrusion 128a extending from the lower surface of sector gear 128, and a first guide slot 114 formed in main slide member 110 having a horizontal guide portion 113 and a vertical guide portion 112 connected thereto and into which the protrusion 128a is inserted. Therefore, as main slide member 110 moves, protrusion 128a of sector gear 128 moves along first guide slot 114, thus rotating sector gear 128.

Referring to Figure 3, the second interlocking means for interlocking the pair of pole bases 121 and 122 with sector gear 128 is comprised of a pair of loading gears 123 and 124 installed on deck 100 to be spaced from each other by a predetermined distance, a plurality of link members 126 and 127 for connecting first and second loading gears 123 and 124 to pole bases 121 and 122, respectively, and an idler gear 125 for connecting first loading gear 123 to second loading gear 124. Here, second loading gear 124 is installed to engage with sector gear 128. Therefore, when sector gear 128 rotates by interlocking with main slide member 110, first and second loading gears 123 and 124 rotate to load and unload pole bases 121 and 122.

Referring to Figures 3, 4 and 8, the constitution of the third interlocking means will be described. A pinch lever 130 having pinch roller 131 rotatably installed thereon is rotatably installed on deck 100. A first extension pin 132 is extended from the lower surface of one end of pinch lever 130, and an extension piece 133 is bent downward from the other end of pinch lever 130. A first lever member 180 is installed under pinch lever 130, sharing the same rotation axis of pinch lever 130. A second extension pin 181 is extended from the lower surface of first lever member 180. A second lever member 140 is installed under first lever member 180 and connected to pinch lever 130 and first lever member 180 on the same rotation axis. A through hole 143 into which second extension pin 181 fits is formed in one end portion of second lever member 140. Extension piece 133 of pinch lever 130 makes contact with an edge of second lever member 140. A first spring 134 for connecting first extension pin 132 to deck 100 is installed at pinch lever 130 to elastically bias pinch roller 131 so that pinch roller 131 retreats from capstan motor shaft 161. A second spring 144 is installed for connecting first lever member 180 and second lever member 140. A second guide slot 117 is formed to be combined with second extension pin 181 in main slide member 110. Second guide slot 117 is comprised of an inclined guide portion 115 and a horizontal guide portion 116. Therefore, as main slide member 110 moves, first lever member 180 rotates. Here, second lever member 140 and pinch lever 130 rotate together with first lever member 180 by second spring 144 and extension piece 133. Reference numeral 110a in Figure 4 denotes a third guide slot into which the rotation supporting shaft of pinch lever 130, first lever member 180, and second lever member 140 inserts.

Referring to Figures 3, 9, 10 and 11, the constitution of the fourth interlocking means for interlocking tension lever 190 with master cam gear 105 will be described.

A cam pin 311a is formed on the upper surface of upper cam portion 311 in master cam gear 105, and a cam protrusion 311b is extended from the outer circumferential surface of upper cam portion 311. Tension lever 190 is provided with a first interlocking portion 191 for interlocking with cam pin 311a and a second interlocking portion 192 for interlocking with cam protrusion 311b. Second interlocking portion 192 is formed on the lower surface of tension lever 190. A plate member 170 is fixed to deck 100, over main slide member 110. Tension lever 190 is rotatably installed in plate member 170, and connected to plate member 170 with a spring 195.

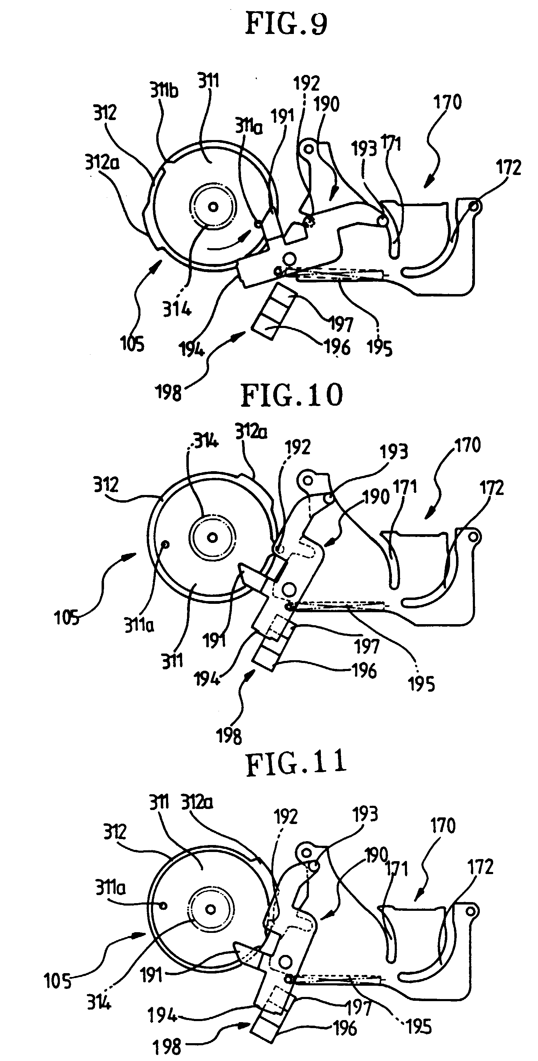

As shown in Figure 9, the fourth interlocking means as constituted above unloads tension lever 190, when first interlocking portion 191 is interlocked with cam pin 311a.

Referring to Figures 12, 13 and 14, the fifth interlocking means for interlocking impedance roller 104 with master cam gear 105 is constituted as follows.

A cam interlocking portion 312a is formed on the outer circumferential surface of lower cam portion 312 in master cam gear 105. A roller lever 102 having impedance roller 104 installed thereon is rotatably installed on deck 100 adjacent to master cam gear 105, and is V-shaped. Impedance roller 104 is installed on one end of roller lever 102, and a protrusion 103 is formed on the other end thereof. The rotation supporting shaft of roller lever 102 is combined with a torsion spring 185 so that protrusion 103 is elastically biased against the outer circumferential surface of lower cam portion 312 in master cam gear 105. Therefore, when protrusion 103 is brought into contact with cam interlocking portion 312a of master cam gear 105, roller lever 102 rotates.

Pressing means is further provided to securely press pinch roller 131 onto capstan motor shaft 161.

As shown in Figure 3, the pressing means includes a pressing lever member 118 rotatably installed on main slide member 110 and a spring member 119 installed between an end portion of pressing lever member 118 and main slide member 110. Therefore, when main slide member 110 moves, the other end portion of pressing lever member 118 presses first extension pin 132 of pinch lever 130. Thus, pinch roller 131 is more tightly pressed against capstan motor shaft 161.

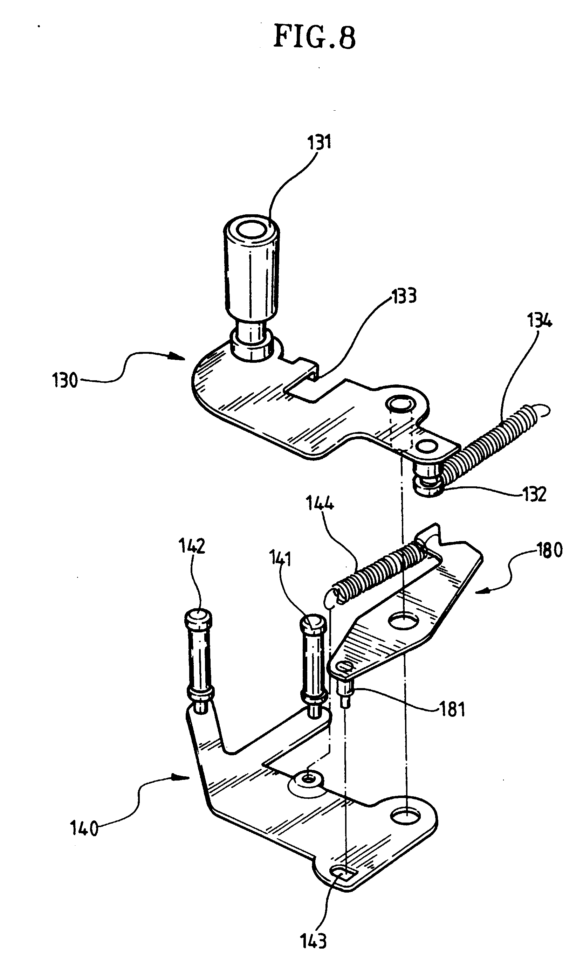

As shown in Figures 3 and 8, a guide roller 141 and a guide post 142 for guiding tape 500 are installed on second lever member 140. Guide post 142 and guide roller 141 guide tape 500, adjacent to pinch roller 131 and capstan motor shaft 161 which are pressed against each other, respectively.

In addition, referring to Figures 3 and 15-18, an upper guide block 175 having upper guide rails 176 and 177 formed thereon for guiding pole bases 121 and 122, respectively, is installed around the outer circumference of head drum 120. Lower guide rails 171 and 172 are installed in plate member 170 and are connected to upper guide rails 176 and 177, for guiding pole bases 121 and 122, respectively.

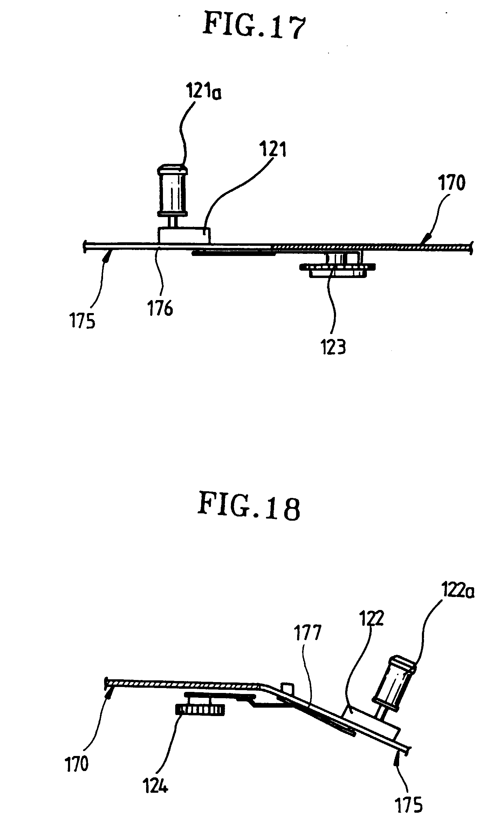

Here, head drum 120 is inclined toward the rear left thereof. Therefore, as shown in Figure 17, upper guide rail 176 is horizontal, and as shown in Figure 18, upper guide rail 177 is inclined in the same direction that head drum 120 is inclined.

Meanwhile, speed controlling means is further provided for controlling the rotative speed of reel tables 210 and 220, according to the rotative angle of tension lever 190. The speed controlling means is constituted as follows. Referring to Figures 3, 9, 10 and 11, a blocking board 194 is downwardly bent from an end portion of tension lever 190. A sensor member 198 is formed on deck 100, corresponding to the rotative path of blocking board 194, and has a light-emitting portion 197 and a light-receiving portion 196. Therefore, when blocking board 194 passes between light-receiving portion 196 and light-emitting portion 197, the amount of light received by light-receiving portion 196 varies. Here, the received light is converted into an electrical signal and applied to the reel table driving motors (not shown). Then, the speed of reel tables 210 and 220 is controlled according to the amount of current applied thereto.

The operations and effects of the deck mechanism for a magnetic recording/reproducing apparatus according to the present invention will be described.

### TAPE UNLOADING

Referring to Figures 3 and 5, main slide member 110 is located on its extreme right position in reference to Figure 3. Protrusion 128a of sector gear 128 is located at the lower end of vertical guide portion 112 of first guide slot 114, and pole bases 121 and 122 are located at the lower ends of lower guide rails 171 and 172, respectively.

Referring to Figures 3, 5 and 8, second interlocking pin 181 of first lever member 180 is located at the lower end of inclined guide portion 115, and pinch lever 130 is rotated counterclockwise by first spring 134. Here, second lever member 140 is rotated together by extension piece 133 of pinch lever 130. Thus, pinch roller 131 is separated from capstan motor shaft 161.

As shown in Figure 9, tension lever 190 is rotated counterclockwise by interlocking with cam pin 311a of master cam gear 105. Here, spring 195 is tensed.

Second interlocking portion 192 of tension lever 190 makes contact with plate member 170, and thus tension lever 190 stops its counterclockwise rotation.

As shown in Figure 12, protrusion 103 of roller lever 102 is pressed tightly against the outer circumferential surface of lower cam portion 312 of master cam gear 105, by torsion spring 185.

### TAPE LOADING

Referring to Figure 3, when master cam gear 105 rotates clockwise by motor 101, main slide member 110 moves to the left in reference to the drawing. Here, protrusion 128a of sector gear 128 is guided along first guide slot 114 of main slide member 110. Thus, sector gear 128 rotates clockwise, as shown in Figures 5, 6 and 7. When sector gear 128 rotates clockwise by interlocking with main slide member 110, first and second loading gears 123 and 124 rotate counterclockwise. Here, guide rollers 121a and 122a installed on first and second loading gears 123 and 124 extract tape 500 from cassette 300 and load it onto head drum 120.

During the loading operation of tape 500, second extension pin 181 of first lever member 180 is interlocked with second guide slot 117 of main slide member 110. Here, first lever member 180 rotates clockwise, and second lever member 140 rotates counterclockwise by the force of second spring 144 connected to first lever member 180. Pinch lever 130 rotates together with second lever member 140 by extension piece 133. Here, when tape 500 is completely loaded, pinch roller 131 remains slightly apart from capstan motor shaft 161.

As shown in Figure 9, when master cam gear 105 rotates counterclockwise with tension lever 190 unloaded, first interlocking portion 191 of tension lever 190 is detached from cam pin 311a. Here, tension lever 190 rotates counterclockwise by the force of spring 195.

While master cam gear 105 rotates counterclockwise, protrusion 103 of roller lever 102 slides against the outer circumferential surface of lower cam portion 312 of master cam gear 105 by torsion spring 185. Here, protrusion 103 does not touch cam interlocking portion 312a of master cam gear 105.

### PLAY

Referring to Figures 3, 7 and 15, master cam gear 105 rotates counterclockwise by motor 101, and then main slide member 110 move further to the left in reference to Figure 3. At the same time, first lever member 180 guided along second guide slot 117 of main slide member 110 rotates clockwise a little more. Thus, second lever member 140 and pinch lever 130 also rotate slightly clockwise. Thus, pinch lever 131 is pressed against capstan motor shaft 161.

When main slide member 110 moves to the left and pinch roller 131 is pressed against capstan motor shaft 161, first extension pin 132 of pinch lever 130 makes contact with the end portion of pressing lever member 118. Then, pressing lever member 118 rotates counterclockwise, while in contact with first extension pin 132, by the movement of main slide member 110. Here, since pressing lever member 118 is elastically biased clockwise by the restoring force of spring 119, pinch roller 131 remains securely pressed against capstan motor shaft 161.

As shown in Figure 11, second interlocking portion 192 of tension lever 190 is brought into contact with the outer circumferential surface of upper cam portion 311 of master cam gear 105 by spring 195. Here, blocking board 194 of tension lever 190 is located between light-receiving portion 196 and light-emitting portion 197 of sensor member 198.

As shown in Figure 13, protrusion 103 of roller lever 102 is interlocked with cam interlocking portion 312a of master cam gear 105. Therefore, roller lever 102 rotates clockwise. Here, impedance roller 104 securely guides tape 500, as shown in Figure 15.

In the play mode, tape 500 travels from guide pole 169 to guide post 141, through tension pole 193, impedance roller 104, guide roller 121a, head drum 120, guide roller 122a, inclined guide pins 167 and 168, guide post 142, and pinch roller 131 and capstan motor shaft 161. During the play operation, the tension of tape 500 varies with the wound length of tape 500. Thus, tension lever 190 rotates clockwise or counterclockwise according to the tension of tape 500. Here, blocking board 194 of tension lever 190 changes the amount of light reaching light-receiving portion 196, which is converted into an electrical signal and applied to the reel driving motors. Therefore, reel tables 210 and 220 can be driven at a controlled speed to properly maintain the tape tension.

### FAST FORWARD AND REWIND

Referring to Figures 3 and 16, master cam gear 105 rotates slightly to the right in the reference to the drawings by reverse rotation of motor 101. Therefore, main slide member 110 moves slightly to the right. Here, first extension pin 132 of pinch lever 130 is separated from pressing lever member 118, and pinch lever 130 rotates counterclockwise by the force of first spring 134. Thus, pinch roller 131 is slightly separated from capstan motor shaft 161.

As shown in Figure 10, second interlocking portion 192 of tension lever 190 makes contact with cam protrusion portion 311b by the counterclockwise rotation of master cam gear 105. Here, tension lever 190 rotates clockwise, thus releasing the tension of tape 500.

As shown in Figure 12, protrusion 103 of roller lever 102 is detached from cam interlocking portion 312a. Therefore, roller lever 102 rotates counterclockwise, moving impedance roller 104 slightly to the left.

Thus, tape 500 rapidly travels by the reel driving motors.

As described above, since in the deck mechanism for a magnetic recording/reproducing apparatus, the above plurality of guiding devices are interlocked with master cam gear 105 and main slide member 110, the deck mechanism is simplified and can be accurately controlled.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A deck mechanism for a magnetic recording/reproducing apparatus, comprising: a tape-guiding unit including a deck (100), a head drum (120) being installed on said deck and having a plurality of magnetic heads mounted thereon, a pair of reel tables (210, 220) installed on said deck, for seating a tape (500) thereon, a reel driving motor for rotating said reel tables (210, 220), a pair of pole bases (121, 122) provided with guide rollers (121a, 122a), for extracting said tape (500) from a tape cassette (300) and loading said tape (500) onto said head drum (120), a capstan motor shaft (161), a pinch roller (131) for pressing said tape (500) against said capstan motor shaft (161) such that said tape (500) travels at a constant speed, a tension lever (190) provided with a tension pole (193), for controlling the tension of said travelling tape (500), and an impedance roller (104) for securely guiding said tape (500); and sequential driving means for sequentially interlocking said tape-guiding unit.

2. A deck mechanism for a magnetic recording/reproducing apparatus as claimed in claim 1, wherein said sequential driving means comprising:
a driving motor (101) for generating force;
a master cam gear (105) including a large-diameter gear portion (313) connected to said driving motor (101), a small-diameter portion (314) sharing the same rotation axis with said large-diameter portion (313), and a cam portion having an upper cam portion (311) and a lower cam portion (312);
a main slide member (110) having a rack gear portion (111) which engages with said small-diameter gear portion (314), for sliding laterally by interlocking with said master cam gear (105);
a sector gear (128) rotatably installed on said deck (100);
first interlocking means for rotating said sector gear (128) according to the movement of said main slide member (110);
second interlocking means for loading and unloading said pair of pole bases (121, 122) by interlocking said pair of pole bases (121, 122) with said rotating sector gear (128);
third interlocking means for pressing and detaching said pinch roller (131) to and from said capstan motor shaft (161) by interlocking said pinch roller (131) with said main slide member (110);
fourth interlocking means for interlocking said tension lever (190) with said master cam gear (105); and
fifth interlocking means for interlocking said impedance roller (104) with said master cam gear (105),
so that said tape-guiding unit is interlocked with said master cam gear (105) and said main slide member (110).

3. A deck mechanism for a magnetic recording/reproducing apparatus as claimed in claim 2, wherein said first interlocking means is constituted such that a protrusion (128a) is extended from the lower surface of said sector gear (128) and said main slide member (110) is formed with a first guide slot (114) having a horizontal guide portion (113) and a vertical guide portion (112) coupled to said horizontal guide portion (113) and into which said protrusion (128a) inserts, so that when said main slide member (110) moves, said protrusion (128a) of said sector gear (128) moves along said first guide slot (114).

4. A deck mechanism for a magnetic recording/reproducing apparatus as claimed in claim 2 or 3, wherein said second interlocking means comprises a pair of first and second loading gears (123, 124) rotatably installed on said deck (100) apart from each other by a predetermined distance, a plurality of link members (126, 127) for connecting said first and second loading gears (123, 123) to said pole bases (121, 122), respectively, and an idler gear (125) for connecting said first loading gear (123) to said second loading gear (124),
so that one of said first and second loading gears (123, 124) engages with said sector gear (128).

5. A deck mechanism for a magnetic recording/reproducing apparatus as claimed in claim 2, 3 or 4 wherein said third interlocking means comprises:
a pinch lever (130) which is rotatably installed on said deck (100) and on which said pinch roller (131) is installed, having a first extension pin (132) extended from the lower surface of an end of said pinch lever (130) and an extension piece (133) bent downward from the other end thereof;
a first lever member (180) installed under said pinch lever (130), sharing the same rotation axis with said pinch lever (130), and having a second extension pin (181) extended from the lower surface thereof;
a second lever member (140) installed under said first lever member (180), sharing the same rotation axis with said first lever member (180), and whose edge makes contact with said extension piece (133) of said pinch lever (130);
a first spring (134) for connecting said first extension pin (132) of said pinch lever (130) to said deck (100), such that said pinch roller (131) is elastically biased to be separated from said capstan motor shaft (161); and
a second spring (144) for connecting said first lever member (180) to said second lever member (140),
said main slide member (110) having a second guide slot (117) having an inclined guide portion (115) and a horizontal guide portion (116) connected to said inclined guide portion (115) and into which said second extension pin (181) inserts, so that as said main slide member (110) moves, said first and second lever members (180, 140) and said pinch lever (130) rotate.

6. A deck mechanism for a magnetic recording/reproducing apparatus as claimed in claim 2, 3, 4 or 5 wherein said fourth interlocking means comprises: a cam pin (311a) formed on the upper surface of an upper cam portion (311) of said master cam gear (105); a cam protrusion (311b) formed on the outer circumference surface of said upper cam portion (311); first and second interlocking portions (191, 192) are installed on said tension lever (190) to interlock with said cam pin (311a) and said cam protrusion portion (311b), respectively; a plate member (170) fixed on said deck (100) over said main slide member (110), on which said tension lever (190) is rotatably installed; and a spring member (195) for connecting said tension lever (190) to said plate member (170),
so that when said cam pin (311a) interlocks with said first interlocking portion (191), said tension lever (190) is unloaded.

7. A deck mechanism for a magnetic recording/reproducing apparatus as claimed in claim 2, 3, 4, 5 or 6, wherein said fifth interlocking means comprises:
a cam interlocking portion (312a) formed on the outer circumferential surface of a lower cam portion (312) of said master cam gear (105); and
a roller lever (102), being elastically biased to the outer circumferential surface of said lower cam portion (312) and rotatably installed on said deck (100), for supporting said impedance roller (104),
so that said master cam gear (105) is interlocked with said roller lever (102), thereby moving said impedance roller (104).

8. A deck mechanism for a magnetic recording/reproducing apparatus as claimed in claim 5, or claims 6 or 7 as appendant thereto, further comprising pressure-maintaining means for securely keeping said pinch roller (131) pressed against said capstan motor shaft (161).

9. A deck mechanism for a magnetic recording/reproducing apparatus as claimed in claim 8, wherein said pressure-maintaining means comprises a pressing lever member (118) rotatably installed on said main slide member (110), and a spring member (119) for connecting an end portion of said pressing lever member (118) to said main slide member (110),
so that when said main slide member (110) moves, the other end of said pressing lever member (118) presses said first extension pin (132) of said pinch lever (130).

10. A deck mechanism for a magnetic recording/reproducing apparatus as claimed in claim 5, or any of claims 6 to 9 as appendant thereto, wherein said second lever member (140) has a guide roller (141) and a guide post (142), installed thereon.

11. A deck mechanism for a magnetic recording/reproducing apparatus as claimed in claim 6, or any of claims 7 to 10 as appendant thereto, wherein said plate member (170) has guide rails (171, 172) installed thereon, for guiding said pair of pole bases (121, 122), respectively.

12. A deck mechanism for a magnetic recording/reproducing apparatus as claimed in claim 1, further comprising an upper guide block (175) having upper guide rails (176, 177) for guiding said pair of pole bases (121, 122), respectively, adjacent to the outer circumference of said head drum (120), and a plate member (170) having lower guide rails (171, 172) for guiding said pair of pole bases (121, 122), respectively, each lower guide rail (171, 172) being connected to one of said pole bases (121, 122).

13. A deck mechanism for a magnetic recording/reproducing apparatus as claimed in claim 12, wherein said head drum (120) is inclined, and one of said guide rails (177) is inclined in the same direction that said head drum (120) is inclined.

14. A deck mechanism for a magnetic recording/reproducing apparatus as claimed in any of the preceding claims, further comprising speed controlling means for controlling the speed of said reel driving motor according to the rotative angle of said tension lever (190).

15. A deck mechanism for a magnetic recording/reproducing apparatus as claimed in claim 14, wherein said speed controlling means comprises a blocking board (194) bent from an end portion of said tension lever (190), and a sensor member (198) installed on the deck (100) corresponding to the rotative path of said blocking board (194) and having a light-receiving portion (196) and a light emitting portion (197), so that light received by said light-receiving portion (196) is converted into an electrical signal according to the location of said blocking board (194) between said light-receiving portion (196) and said light-emitting portion (197), and applied to said reel driving motor, thereby controlling the speed of said reel driving motor.
